(19) Europäisches Patentamt

European Patent Office

Office européen des brevets

(11) **EP 0 728 702 B1**

(12) **EUROPEAN PATENT SPECIFICATION**

(45) Date of publication and mention
of the grant of the patent:
**06.05.1999 Bulletin 1999/18**

(51) Int. Cl.$^6$: **C01G 49/00**

(21) Application number: **96102851.1**

(22) Date of filing: **26.02.1996**

(54) **Lithium iron oxide, synthesis of the same, and lithium cell utilizing the same**

Lithiumeisenoxyd, Verfahren zu seiner Herstellung und eine dieses Oxyd verwendende Lithiumzelle

Oxyde de fer et de lithium, synthèse de celui-ci et cellule au lithium utilisant ledit oxyde

(84) Designated Contracting States:
**DE FR GB NL**

(30) Priority: **27.02.1995 JP 38798/95**

(43) Date of publication of application:
**28.08.1996 Bulletin 1996/35**

(73) Proprietors:
 • **MATSUSHITA ELECTRIC INDUSTRIAL CO., LTD.**
 **Kadoma-shi, Osaka-fu, 571 (JP)**
 • **TODA KOGYO CORP.**
 **Hiroshima-shi, Hiroshima-ken 733 (JP)**

(72) Inventors:
 • **Takada, Kazunori**
 **Hirano-ku, Osaka City, 547 (JP)**
 • **Kondo, Shigeo**
 **Hirakata City, 573 (JP)**
 • **Kanno, Ryoji**
 **Kobe City, 658 (JP)**

 • **Nakamura, Tatsuya**
 **Nishi-ku, Hiroshima City, 730 (JP)**
 • **Takano, Mikio**
 **Ukyo-ku, Kyoto City, 616 (JP)**

(74) Representative:
 **Dr. Elisabeth Jung**
 **Dr. Jürgen Schirdewahn**
 **Dipl.-Ing. Claus Gernhardt**
 **Postfach 40 14 68**
 **80714 München (DE)**

(56) References cited:
 **GB-A- 2 087 858          US-A- 4 567 031**

 • **CHEMICAL ABSTRACTS, vol. 121, no. 22, 28 November 1994 Columbus, Ohio, US; abstract no. 259652w, XP002001893 & JP-A-06 187 990 (SEIKO INSTR & ELECTRONICS ET AL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### BACKGROUND OF THE INVENTION

#### 1. Field of the Invention

The present invention relates to a lithium iron oxide applicable as an electrode active material of lithium batteries, a method of synthesizing the lithium iron oxide, and a lithium battery including the lithium iron oxide as an active material.

#### 2. Description of the Prior Art

With the development of small, portable apparatus including laptop computers and cellular phones, batteries are in great demand as a power source. Since lithium has a small atomic weight but a large ionization energy, lithium batteries have extensively been studied as a candidate of high energy density.

Application of electrode active materials for generating a 4V-voltage, such as $Li_xCoO_2$ and $Li_xNiO_2$, to such lithium batteries has been studied to enhance the electromotive force of the lithium batteries and realize the high energy density.

High manufacturing cost of the cobalt- or nickel-containing compounds, such as $Li_xCoO_2$ and $Li_xNiO_2$, and relatively small outputs of cobalt and nickel make these active materials unsuitable for the practical use as the material of batteries. Replacement of cobalt or nickel in the above compounds with another transition metal element, for example, inexpensive and abundant iron, is expected to solve the above problem.

$LiCoO_2$ and $LiNiO_2$ have a layered rock salt structure ($\alpha$-$NaFeO_2$ type). Other than cobalt and nickel, only vanadium and chromium give the compounds of layered rock salt structure. Iron gives a disordered tetragonal rock salt structure by high-temperature synthesis and an ordered tetragonal crystal structure by low-temperature synthesis. Neither is applicable for the active material of lithium batteries.

### SUMMARY OF THE INVENTION

One object of the present invention is thus to provide a method of synthesizing a lithium iron oxide represented by the formula $Li_xFeO_2$ (where $0<x\leq2$) applicable as an active material of lithium batteries.

Another object of the present invention is to provide a lithium secondary battery including a relatively inexpensive and abundant iron compound as an active material.

The present invention is directed to a method of synthesizing a lithium iron oxide, which method comprising the steps of:

preparing a starting material which includes at least iron(III) oxyhydroxide and a lithium compound, and

heating said starting material in a water vapor-containing atmosphere,

wherein the heating temperature in said heating step is not higher than 350°C, and

wherein the water vapor pressure in said heating step is lower than the saturated water vapor pressure at the heating temperature.

A preferable example of the iron (III) oxyhydroxide used here is $\gamma$-FeOOH.

The ratio of the lithium compound to the iron(III) oxyhydroxide in the starting materials expressed as the molar ratio of lithium to iron is preferably in the range of Li/Fe≥1 or more, preferably in the range of Li/Fe≥1.4.

In accordance with a preferable mode of the present invention, the method further comprises the step of immersing the reaction product obtained by the heating step in water having a temperature of not higher than 30°C after the heating step.

It is preferable that the lithium compound used as one of the starting materials is at least one selected from the group consisting of $Li_2O$, $LiOH$, and $LiOH \cdot H_2O$.

The heating temperature in the heating step is not higher than 350°C and preferably not lower than 100°C.

The water vapor pressure in the heating step is lower than the saturated water vapor pressure at the heating temperature.

In a preferred mode of the present invention, the method comprises the steps of:

preparing a starting material which includes at least iron (III) oxyhydroxide and a lithium compound,

heating said starting material at a temperature of not higher than 350°C and not lower than 100°C in a water vapor-containing atmosphere to obtain a reaction product, and

immersing said reaction product in water having a temperature of not higher than 30°C to dissolve an unreacted part of said lithium compound remained in said reaction product and to obtain a lithium iron oxide expressed by $LiFeO_2$.

The present invention is also directed to a lithium battery, which comprises an electrolyte having at least lithium ion conductivity and an electrode containing the lithium iron oxide as an electrode active material.

While the novel features of the invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWINGS

Fig. 1 is a vertical cross-sectional view illustrating a lithium battery prepared as an example in accordance with the present invention.

Fig. 2 is a graph showing charge-discharge curves of the lithium battery of the example.

Fig. 3 is a graph showing charge-discharge curves of a lithium battery prepared as another example in accordance with the present invention.

Fig. 4 is a graph showing charge-discharge curves of a lithium battery prepared as a reference.

Fig. 5 is a graph showing charge-discharge curves of a lithium battery prepared as still another example in accordance with the present invention.

Fig. 6 is a graph showing charge-discharge curves of a solid lithium battery prepared as an example in accordance with the present invention.

## DETAILED DESCRIPTION OF THE PREFERRED EMBODIMENTS

Iron(III) oxyhydroxide includes protons between the layers of the layered structure or in the tunnel of the tunnel structure. Heating the iron(III) oxyhydroxide with a lithium compound in the presence of water vapor leads to the ion exchange reaction between proton and lithium ion, which results in elimination of water and introduction of lithium into the inter-layer space or the tunnel. $LiFeO_2$ obtained accordingly has a layered structure, wherein lithium ions electrochemically move in and out of the tunnel or the inter-layer space, and acts as the active material for lithium batteries. The lithium iron oxide of the present invention, which is applicable for the active material of lithium batteries, is prepared by heating the starting materials including at least an iron(III) oxyhydroxide and a lithium compound in a water vapor-containing atmosphere.

When $\gamma$-FeOOH having the corrugated layer structure of $FeO_6$ octahedrons is used as the iron(III) oxyhydroxide, the reaction with the lithium compound causes a shift in layers concomitant with elimination of $H_2O$. This results in formation of six-coordinate octahedrons between the layers and introduction of lithium therein. $LiFeO_2$ thus obtained has the corrugated layer structure like $LiMnO_2$. The corrugated layer structure of $LiFeO_2$ allows lithium ions to electrochemically move in and out of the inter-layer space in an especially smooth manner. Lithium batteries including $LiFeO_2$ as the active material have excellent performance and are operable even in a large current. For the above reason, $\gamma$-FeOOH having the corrugated layer structure of $FeO_6$ octahedrons is especially preferable as the iron(III) oxyhydroxide.

Products synthesized by the above method may include the starting materials, a disordered spinel $\beta$-$LiFe_5O_8$, and disordered $\alpha$-$LiFeO_2$ as impurities. These impurities included in the product undesirably lower the capacity of batteries using the product as the active material. The method of synthesis described below gives a lithium iron oxide without such impurities.

The major impurity generated by the above method is the disordered spinel $\beta$-$LiFe_5O_8$, which has a less lithium content than $LiFeO_2$. The lithium content of the starting materials greater than the stoichiometric ratio effectively suppresses the production of disordered spinel $\beta$-$LiFe_5O_8$. The ratio of the lithium compound to the iron(III) oxyhydroxide in the starting materials expressed by the molar ratio of lithium to iron is thus preferably in the range of Li/Fe≥1, which scarcely gives the disordered spinel $\beta$-$LiFe_5O_8$, or more, preferably in the range of Li/Fe≥1.4, which gives substantially no disordered spinel $\beta$-$LiFe_5O_8$.

The lithium content of the starting materials greater than the stoichiometric ratio often causes excess lithium compounds, such as LiOH, to remain in the reaction product. These remaining lithium compounds are easily removed by dissolution in water. Hot water, however, leads to production of disordered $\alpha$-$LiFeO_2$ or decomposition of the reaction product to give the starting material, iron(III) oxyhydroxide. For the purpose of removal, it is thus required to dissolve the remaining lithium compounds in cold water within a temperature range, which does not give iron(III) oxyhydroxide. The method of manufacturing the lithium iron oxide applicable for the active material of lithium batteries preferably includes the step of immersing the reaction product in water having a temperature of not higher than 30°C after the heating step.

Lithium compounds reacting with the iron(III) oxyhydroxide to produce $H_2O$ are preferably used as the starting material. Such lithium compounds realize a water vapor-containing atmosphere even in a closed reaction tube without $H_2O$ addition and allow the ion-exchange reaction to proceed to give the desired lithium iron oxide. $Li_2CO_3$ however, may cause evolution of carbon dioxide and thereby contamination of the reaction product with the impurity. $Li_2O$, LiOH, and LiOH $\cdot$ $H_2O$, on the other hand, produce only water vapor other than the lithium iron oxide by the reaction according to the following reaction formulae (1), (2), and (3), respectively. These compounds thus enable the reaction to proceed in a water vapor-containing atmosphere without the separately introduced water vapor and effectively interfere with the production of impurities. $Li_2O$, LiOH, LiOH $\cdot$ $H_2O$, and their mixtures are accordingly preferable as the starting material.

$$2FeOOH + Li_2O \rightarrow 2LiFeO_2 + H_2O \qquad (1)$$

$$FeOOH + LiOH \rightarrow LiFeO_2 + H_2O \qquad (2)$$

$$FeOOH + LiOH \cdot H_2O \rightarrow LiFeO_2 + 2H_2O \qquad (3)$$

The ion-exchange reaction between protons and lithium ions proceeding at the temperature of higher than 350°C gives α-LiFeO$_2$, which is regarded as a stable phase in a high temperature range. The range of heating temperature for the synthesis is thus not higher than 350°C. The reaction proceeding at significantly low temperatures does not give α-LiFeO$_2$ but undesirably slows the rate of ion-exchange reaction to prolong the reaction time. The practical heating temperature for the synthesis is thus not lower than 100°C.

The ion-exchange reaction under the saturated water vapor pressure leads to production of disordered α-LiFeO$_2$. It is thus necessary that the water vapor pressure in the ion-exchange reaction is lower than the saturated water vapor pressure at the heating temperature.

The lithium iron oxide obtained shows a high electrochemical activity in lithium ion-conductive electrolytes, and is thus preferably used as the active material of lithium batteries, instead of the conventional lithium compounds containing cobalt or nickel, both of which have relatively small outputs and increase the manufacturing cost. Although LiCoO$_2$, which currently goes into practical application as the active material of lithium batteries, has the theoretical capacity density of 274 mAh/g, the structural change due to the lithium deintercalation decreases the reversibly usable capacity to 130 mAh/g, which is approximately half the theoretical value. The lithium iron oxide of the present invention has an actual capacity density of 283 mAh/g and gives lithium batteries of higher capacity when used as the active material.

These and other features, advantages, and aspects of the present invention will become more apparent through the description of examples.

Example 1

Lithium iron oxides expressed by LiFeO$_2$ were synthesized from starting materials, γ-FeOOH and LiOH·H$_2$O, and the electrochemical activities of the resultant lithium iron oxides were measured.

A one-to-one (molar ratio) mixture of γ-FeOOH and LiOH·H$_2$O was sealed in a gold tube, which was placed in an electric furnace to make the reaction proceed at various temperatures of 80°C to 500°C for 24 hours. The inside volume of the gold tube was 1.5 to 3 times the volume of water vapor at the heating temperature, which was calculated according to the reaction formula (3).

The reaction products thus obtained were chemically identified by X-ray diffractometry. The specimens synthesized in the temperature range of 100°C to 350°C had X-ray diffraction patterns, which were similar to that of orthorhombic LiMnO$_2$. This showed that the primary component of the reaction products synthesized in the above temperature range was LiFeO$_2$ with the corrugated layer structure, which was similar to that of orthorhombic LiMnO$_2$. A peak corresponding to the disordered spinel β-LiFe$_5$O$_8$ was also observed in these reaction products. This proved the presence of disordered spinel β-LiFe$_5$O$_8$ as an impurity in the reaction products. The specimens synthesized at the heating temperature of lower than 100°C had a sharp peak corresponding to one of the starting materials γ-FeOOH, which was thus proved to be the major component of the reaction products. The specimens synthesized at the heating temperature of higher than 350°C had a sharp peak corresponding to α-LiFeO$_2$, which was thus proved to be the major component of the reaction products.

The specimen synthesized at the heating temperature of 80°C was further heated at 80°C for 240 hours. This further heating process significantly decreased the intensity of the peak corresponding to γ-FeOOH. This shows that a long time period is required for the ion-exchange reaction at the temperature of 80°C.

The method of Example 1 according to the present invention gave the lithium iron oxide with the corrugated layer structure.

Electrochemical properties of the lithium iron oxides synthesized in the temperature range of 100°C to 350°C were evaluated by the following method.

A mixture including 80% by weight of each lithium iron oxide, 10% by weight of polytetrafluoroethylene as a binder, and 10% by weight of carbon as a conductive material was charged into a current collector of titanium mesh and used as a working electrode. A titanium lead terminal was spot-welded to the working electrode thus obtained. A counter electrode and a reference electrode were prepared respectively by attaching a lithium foil to a titanium mesh and spot-welding a titanium lead terminal to the titanium mesh.

An electrolyte was prepared by dissolving 1M lithium perchlorate (LiClO$_4$) in a one-to-one (volume ratio) solvent mixture of propylene carbonate and dimethoxyethane.

The working electrode, the counter electrode, and the reference electrode were immersed in the electrolyte to form an electrochemical cell. The potential-current characteristic of the electrochemical cell was measured by sweeping the potential at a rate of 10 mV/sec in a potential range of 1.5 V to 3.5 V vs. lithium. The assembly and measurement of the electrochemical cell was carried out in a dry box filled with argon.

The potential-current curve thus obtained showed a redox reaction between 2V and 3V. Each lithium iron oxide of Example 1 synthesized in the temperature range of 100° to 350°C was proved to be electrochemically active in the electrolyte having the lithium ion conductivity.

The disordered spinel β-LiFe$_5$O$_8$, which was measured in the above manner, showed substantially no electrochemical activity. The electrochemical activities of the specimens obtained in Example 1 were thus due to LiFeO$_2$ having the corrugated layer structure similar to that of orthorhombic $LiMnO_2$.

The method of Example 1 according to the present invention gave the lithium iron oxide applicable for the active material of lithium batteries.

Example 2

Lithium iron oxides were synthesized in the same manner as in Example 1, except that the starting materials were sealed in a silver tube, instead of the gold tube used in Example 1. The resultant reaction products were identified and their electrochemical properties were evaluated.

The reaction products obtained in Example 2 had electrochemical properties substantially identical with those of Example 1.

The method of Example 2 according to the present invention gave the lithium iron oxide applicable for the active material of lithium batteries.

Example 3

Lithium iron oxides were synthesized in the same manner as in Example 1, except that the starting materials placed in a gold boat were inserted into a reaction tube to be heated in a stream of argon gas bubbled in $H_2O$ at room temperature. The resultant reaction products were identified and their electrochemical properties were evaluated.

The reaction products obtained in Example 3 had electrochemical properties substantially identical with those of Example 1.

The method of Example 3 according to the present invention gave the lithium iron oxide applicable for the active material of lithium batteries.

Reference 1

Lithium iron oxides were synthesized under the saturated water vapor pressure in Reference 1.

Lithium iron oxides were prepared from the same starting materials as those of Example 1 according to the method similar to that of Example 1, except that the gold tube was filled out with the starting materials and that $H_2O$ was further filled in the gold tube to realize an atmosphere of saturated water vapor pressure in the heated gold tube.

The reaction products thus obtained were chemically identified by X-ray diffractometry. The X-ray diffraction pattern showed that the primary component of the reaction products was disordered $\alpha\text{-}LiFeO_2$ and that only a little amount of the lithium iron oxide with the corrugated layer structure obtained in Example 1 was produced.

Electrochemical properties of the lithium iron oxides obtained were measured in the same manner as in Example 1. Each lithium iron oxide obtained in Reference 1 had an extremely smaller redox current than that of Example 1. This revealed a relatively low electrochemical activity of the lithium iron oxide.

This result showed that the synthesis under the saturated water vapor pressure was not suitable for manufacturing the lithium iron oxide applicable for the active material of lithium batteries.

Example 4

Lithium iron oxides expressed by $LiFeO_2$ were synthesized using LiOH as one of the starting materials, instead of $LiOH \cdot H_2O$ used in Example 1, and the resultant reaction products were identified and evaluated for their electrochemical activities.

A one-to-one (molar ratio) mixture of $\gamma\text{-}FeOOH$ and LiOH was sealed in a gold tube, which was placed in an electric furnace to make the reaction proceed at various heating temperatures of 80°C to 500°C. The inside volume of the gold tube was 1.5 to 3 times the volume of water vapor at the heating temperature, which was calculated according to the reaction formula (2).

The reaction products thus obtained were chemically identified by X-ray diffractometry. The X-ray diffraction patterns obtained in Example 4 were substantially identical with those obtained in Example 1. The specimens synthesized in the temperature range of 100°C to 350°C contained $LiFeO_2$ with the corrugated layer structure similar to that of orthorhombic $LiMnO_2$.

Electrochemical properties of the lithium iron oxides synthesized in the temperature range of 100°C to 350°C were evaluated in the same manner as in Example 1.

The potential-current curve thus obtained showed redox reaction between 2V and 3V. Each lithium iron oxide of Example 4 synthesized in the temperature range of 100° to 350°C was proved to be electrochemically active in the electrolyte having the lithium ion conductivity.

The method of Example 4 according to the present invention gave the lithium iron oxide applicable for the active material of lithium batteries.

Example 5

Lithium iron oxides expressed by $LiFeO_2$ were synthesized using $Li_2O$ as one of the starting materials, instead of $LiOH \cdot H_2O$ used in Example 1, and the resultant reaction products were identified and evaluated for their electrochemical activities.

A two-to-one (molar ratio) mixture of $\gamma\text{-}FeOOH$ and $Li_2O$ was sealed in a gold tube, which was placed in an electric furnace to make the reaction proceed at various heating temperatures of 80°C to 500°C. The inside volume of the gold tube was 1.5 to 3 times the volume of water vapor at the heating temperature, which was calculated according to the reaction formula (1).

The reaction products thus obtained were chemically identified by X-ray diffractometry. The X-ray diffraction patterns obtained in Example 5 were substantially identical with those obtained in Example 1. The specimens synthesized in the temperature range of 100°C to 350°C contained $LiFeO_2$ with the corrugated layer structure similar to that of orthorhombic $LiMnO_2$.

Electrochemical properties of the lithium iron oxides synthesized in the temperature range of 100°C to 350°C were evaluated in the same manner as in Example 1.

The potential-current curve thus obtained showed redox reaction between 2V and 3V. Each lithium iron oxide of Example 5 synthesized in the temperature range of 100°C to 350°C was proved to be electrochemically active in the electrolyte having the lithium ion conductivity.

The method of Example 5 according to the present invention gave the lithium iron oxide applicable for the active material of lithium batteries.

Example 6

Lithium iron oxides were synthesized using a mixture of $LiOH \cdot H_2O$ and LiOH as one of the starting materials, instead of $LiOH \cdot H_2O$ used in Example 1, and the resultant reaction products were identified and evaluated for their electrochemical activities.

A two-to-one-to-one (molar ratio) mixture of $\gamma$-FeOOH, $LiOH \cdot H_2O$, and LiOH was sealed in a gold tube, which was placed in an electric furnace to make the reaction proceed at various heating temperatures of 80°C to 500°C. The inside volume of the gold tube was 1.5 to 3 times the volume of water vapor at the heating temperature, which was calculated according to the reaction formula (4) given below:

$$2FeOOH + LiOH \cdot H_2O + LiOH \rightarrow 2LiFeO_2 + 3H_2O \quad (4)$$

The reaction products thus obtained were chemically identified by X-ray diffractometry. The X-ray diffraction patterns obtained in Example 6 were substantially identical with those obtained in Example 1. The specimens synthesized in the temperature range from 100°C to 350°C contained $LiFeO_2$ with the corrugated layer structure similar to that of orthorhombic $LiMnO_2$.

Electrochemical properties of the lithium iron oxides synthesized in the temperature range from 100°C to 350°C were evaluated in the same manner as in Example 1.

The potential-current curve thus obtained showed redox reaction between 2V and 3V. Each lithium iron oxide of Example 6 synthesized in the temperature range from 100°C to 350°C was proved to be electrochemically active in the electrolyte having the lithium ion conductivity.

The method of Example 6 according to the present invention gave the lithium iron oxide applicable for the active material of lithium batteries.

Example 7

Lithium iron oxides expressed by $LiFeO_2$ were synthesized from the starting materials of Example 1 with a varied ratio of $LiOH \cdot H_2O$ to $\gamma$-FeOOH, and the resultant reaction products were identified and evaluated for their electrochemical activities.

The lithium iron oxides were synthesized in the same manner as in Example 1, except that the molar ratio of $LiOH \cdot H_2O$ to $\gamma$-FeOOH was varied from 1:1 to 2:1, that is, in the range of Li/Fe=1.0 to 2. The heating temperature for the synthesis was fixed to 250°C.

The reaction products thus obtained were chemically identified by X-ray diffractometry. The X-ray diffraction patterns showed that the primary phase was $LiFeO_2$ with the corrugated layer structure similar to that of orthorhombic $LiMnO_2$, like Example 1. For the specimens synthesized in the range of Li/Fe≥1.4, X-ray diffraction patterns revealed substantially no diffraction peak corresponding to the disordered spinel $\beta$-$LiFe_5O_8$ observed in Example 1. A diffraction peak corresponding to LiOH was observed as an impurity in the X-ray diffraction patterns of the specimens synthesized in the range of Li/Fe≥1.2.

Electrochemical properties of the lithium iron oxides thus obtained were evaluated in the same manner as in Example 1.

Every sample showed an electrochemical activity in the electrolyte having the lithium ion conductivity.

The synthesis from the starting materials mixed at a ratio of the lithium compound to the iron(III) oxyhydroxide in the range of Li/Fe≥1.4 gave the lithium iron oxide applicable for the active material of lithium batteries without producing the disordered spinel $\beta$-$LiFe_5O_8$ as the impurity phase.

Example 8

Lithium iron oxides were synthesized in the same manner as in Example 7, except that LiOH was used as one of the starting materials instead of $LiOH \cdot H_2O$ used in Example 7, and the resultant reaction products were identified and evaluated for their electrochemical activities.

The X-ray diffraction patterns obtained in Example 8 had a similar tendency to that of Example 7. Every sample showed an electrochemical activity in the electrolyte having the lithium ion conductivity.

The synthesis from the starting materials mixed at a ratio of the lithium compound to the iron(III) oxyhydroxide in the range of Li/Fe≥1.4 gave the lithium iron oxide applicable for the active material of lithium batteries without producing the disordered spinel $\beta$-$LiFe_5O_8$ as the impurity phase.

Example 9

The lithium iron oxides obtained in Example 7 were immersed in cold water of various temperatures for 30 minutes and dried under reduced pressure after filtration.

The specimens thus obtained were chemically identified by X-ray diffractometry. Those which were immersed in water at a temperature of not higher than 30°C had diffraction peaks corresponding to $LiFeO_2$ with the corrugated layer structure similar to that of orthorhombic $LiMnO_2$ and the disordered spinel $\beta$-$LiFe_5O_8$ at an intensity ratio similar to that of Example 7. The diffraction peak suggesting the presence of LiOH observed in Example 7 was, however, not observed in these specimens having any composition of starting materials.

Mixing the starting materials at a ratio of the lithium compound to the iron(III) oxyhydroxide in the range of Li/Fe≥1.4 and immersing the reaction product in cold water gave the lithium iron oxide having the corrugated layer structure similar to that of orthorhombic $LiMnO_2$ and applicable for the active material of lithium batteries without contamination by impurities.

Example 10

The lithium iron oxides obtained in Example 8 were immersed in cold water of various temperatures in the same manner as in Example 9.

The specimens thus obtained were chemically identified by X-ray diffractometry. Those which were immersed in water at a temperature of not higher than 30°C had diffraction peaks corresponding to $LiFeO_2$ with the corrugated layer structure similar to that of orthorhombic $LiMnO_2$ and the disordered spinel $\beta$-$LiFe_5O_8$ at an intensity ratio similar to that of Example 8. The diffraction peak suggesting the presence of LiOH observed in Example 7 was, however, not observed in these specimens having any composition of starting materials.

Mixing the starting materials at a ratio of the lithium compound to the iron(III) oxyhydroxide in the range of Li/Fe≥1.4 and immersing the reaction product in cold water gave the lithium iron oxide having the corrugated layer structure similar to that of orthorhombic $LiMnO_2$ and applicable for the active material of lithium batteries without contamination by impurities.

Reference 2

In place of cold water in Example 9, hot water was used for the removal of LiOH.

The reaction products obtained in Example 7 were boiled in hot water for 30 minutes and dried under reduced pressure after filtration. The specimens thus obtained were chemically identified by X-ray diffractometry. The X-ray diffraction pattern showed no diffraction peak corresponding to LiOH but had a sharp peak corresponding to disordered $\alpha$-$LiFeO_2$, which was thus proved to be the major phase of the specimens.

Electrochemical properties of the lithium iron oxides obtained were measured in the same manner as in Example 1. Each lithium iron oxide obtained in Reference 2 had an extremely smaller redox current than that of Example 1. This revealed a relatively low electrochemical activity of the lithium iron oxide.

This result showed that immersing in hot water for the removal of impurity LiOH was not suitable in the synthesis of lithium iron oxide applicable for the active material of lithium batteries.

Example 11

A lithium battery was prepared using the lithium iron oxide expressed by $LiFeO_2$ and synthesized from $\gamma$-FeOOH and $LiOH \cdot H_2O$ as the cathode active material. The properties of the lithium battery were then evaluated.

The lithium iron oxide expressed by $LiFeO_2$ was synthesized in the same manner as in Example 1 but at the fixed heating temperature of 250°C.

A cathode was prepared by charging 20 mg of a mixture including 80% by weight of lithium iron oxide, 10% by weight of polytetrafluoroethylene as a binder, and 10% by weight of carbon as a conductive material into a current collector of titanium mesh punched out to a disk of 14 mm in diameter.

An anode was a lithium foil punched out to a disk of 14 mm in diameter.

An electrolyte was prepared by dissolving 1M lithium perchlorate ($LiClO_4$) in a one-to-one (volume ratio) solvent mixture of propylene carbonate and dimethoxyethane.

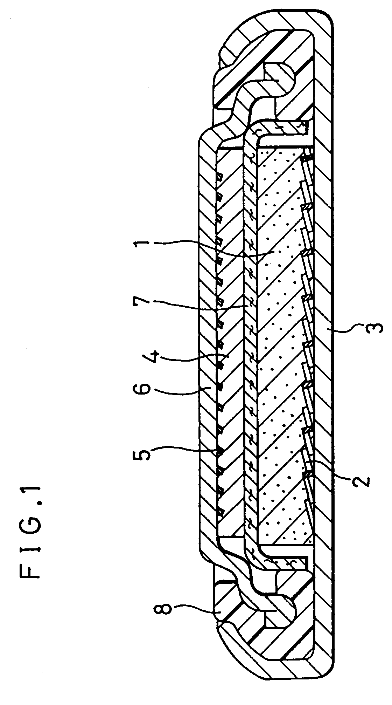

The cathode, the anode, the electrolyte, and a microporous polypropylene film having a thickness of 50 μm used as a separator were combined to form a lithium battery having a cross-section shown in Fig. 1. The lithium battery in Fig. 1 includes a cathode 1, a titanium mesh 2 working as a current collector and supporting the cathode 1, a stainless steel case 3, an anode 4, a titanium mesh 5, a sealing plate 6, a separator 7, and a gasket 8.

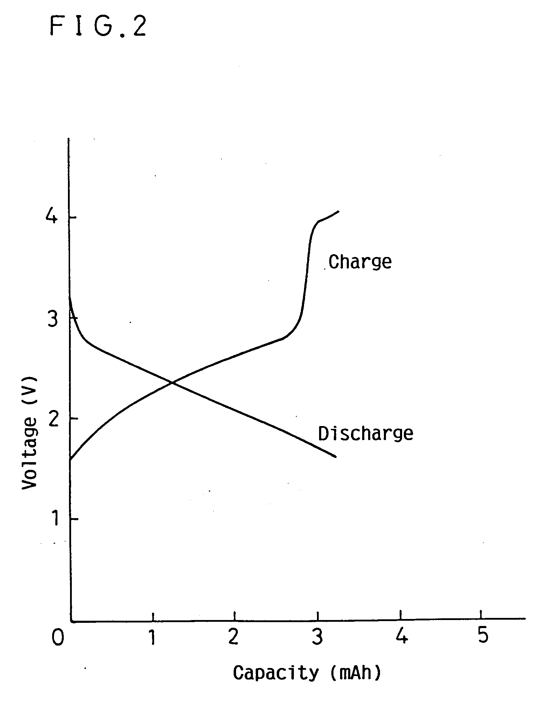

The lithium battery thus prepared was subjected to charge-discharge test at a constant current of 1 mA in a voltage range of 1.6 V to 4.1 V. Fig. 2 shows a charge-discharge curve obtained at the second cycle.

The charge-discharge curve in Fig. 2 shows that it is possible to charge and discharge the lithium battery obtained in a voltage range of 2V to 3V.

According to the present invention, a lithium battery having the lithium iron oxide as the active material can be obtained.

## Example 12

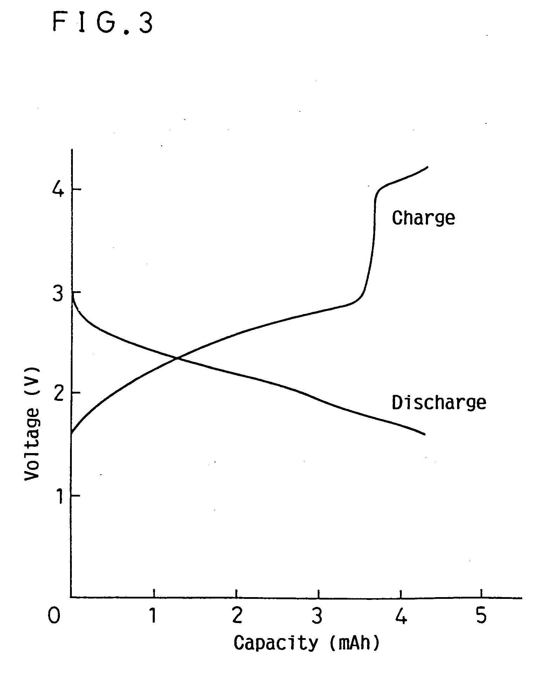

A lithium battery was prepared in the same manner as in Example 11, except that the lithium iron oxide of Example 9 synthesized from the starting materials mixed at the ratio of Li/Fe=1.5 and immersed in water of 0°C was used as the cathode active material instead of the lithium iron oxide used in Example 11. The properties of the lithium battery were evaluated in the same manner as in Example 11. Fig. 3 shows a charge-discharge curve obtained in the second cycle.

The charge-discharge curve of Fig. 3 shows that it is possible to charge and discharge the lithium battery obtained in voltage range of 2V to 3V and the lithium battery of this example has a capacity greater than that of the lithium battery obtained in Example 11.

A reference lithium battery using $LiCoO_2$ as the cathode active material was prepared for the purpose of comparison.

$LiCoO_2$ used as the cathode active material was synthesized in the following manner.

The starting materials used were $Li_2CO_3$ and $Co_3O_4$. A three-to-two (molar ratio) mixture of $Li_2CO_3$ and $Co_3O_4$ was sintered in an alumina crucible in a stream of oxygen at 750°C for 24 hours to yield $LiCoO_2$.

The reference lithium battery was prepared in the same manner as in Example 11, except that $LiCoO_2$ thus obtained was used as the cathode active material. The charge-discharge characteristic of the reference lithium battery was measured in the same manner as in Example 11 but in a different voltage range of 3 V to 4.2 V.

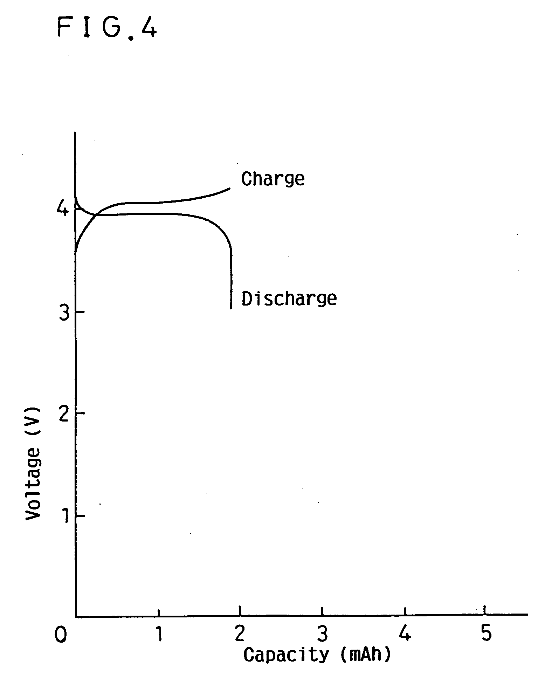

Fig. 4 shows a charge-discharge curve obtained at the second cycle.

The energy and capacity were calculated for the respective batteries based on the results shown in Fig. 3 and Fig. 4. The lithium battery of the present invention which contains the lithium iron oxide as the cathode active material had an energy of 9.2 mWh and a capacity of 4.3 mAh (269 mAh/g of $LiFeO_2$), approximating to the value of the theoretical capacity density. On the contrary, the reference lithium battery which contains $LiCoO_2$ as the cathode active material had an energy of 7.2 mWh and a capacity of 1.9 mAh (119 mAh/g of $LiCoO_2$). This clearly indicated a higher energy density for the lithium battery prepared by the method of the present invention.

The lithium iron oxide with extremely sparse impurities prepared by the method of the present invention was favorably used as the active material to increase the capacity and energy level of the resultant lithium battery.

## Example 13

A lithium battery was prepared using the lithium iron oxide synthesized from $\gamma$-FeOOH and LiOH as the anode active material. The properties of the lithium battery were then evaluated.

The lithium iron oxide expressed by $LiFeO_2$ was synthesized in the same manner as in Example 4 but at the fixed heating temperature of 250°C.

An electrode was prepared by charging 20 mg of a mixture including 80% by weight of lithium iron oxide, 10% by weight of polytetrafluoroethylene as a binder, and 10% by weight of carbon as a conductive material into a current collector of titanium mesh punched out to a disk of 14 mm in diameter.

The electrode was electrolyzed in the electrolyte of Example 11 at the potential of 3 V against lithium and thereby formed an anode for lithium battery. The electrolyte used here was prepared by dissolving lithium perchlorate in the solvent mixture of propylene carbonate and dimethoxyethane.

$LiCoO_2$ synthesized in Example 12 was used as the cathode active material. A cathode was prepared by charging 50 mg of a mixture including 80% by weight of $LiCoO_2$, 10% by weight of polytetrafluoroethylene as a binder, and 10% by weight of carbon as a conductive material into a titanium mesh punched out to a disk of 14 mm in diameter.

A lithium battery including the cathode and anode was manufactured in the same manner as in Example 11.

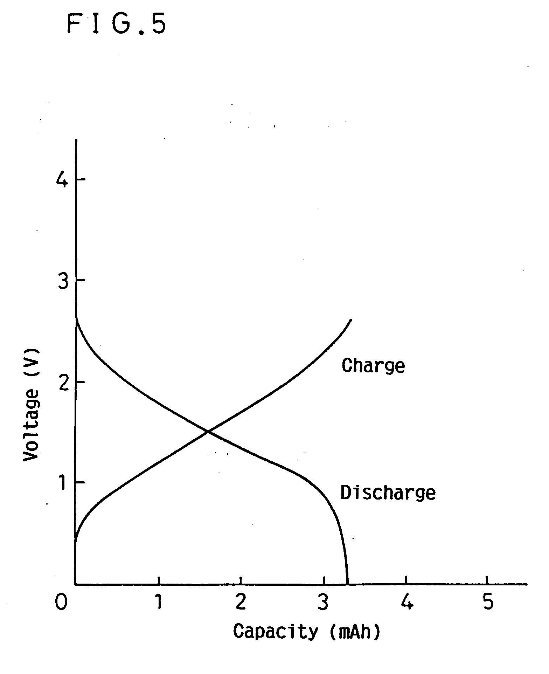

The lithium battery thus prepared was subjected to charge-discharge test at a constant current of 1 mA in a voltage range of 0 to 2.6 V. Fig. 5 shows a charge-discharge curve obtained at the second cycle.

The charge-discharge curve in Fig. 5 shows that it is possible to charge and discharge the lithium battery obtained in a voltage range of 1V to 2V.

According to the present invention, a lithium battery having the lithium iron oxide as the active material can be obtained.

## Example 14

A solid lithium battery manufactured in Example 14 contained the lithium iron oxide expressed by $LiFeO_2$ and synthesized from $\gamma$-FeOOH and LiOH $\cdot$ $H_2O$ and a lithium ion-conductive non-crystalline sulfide-containing solid electrolyte expressed by $0.6Li_2S$-$0.4SiS_2$. The properties of the solid lithium battery were then evaluated.

The lithium iron oxide was synthesized in the same manner as in Example 1 but at the fixed heating temperature of 250°C.

The lithium ion-conductive non-crystalline sulfide-containing solid electrolyte $0.6Li_2S$-$0.4SiS_2$ was synthesized in the following manner.

A three-to-two (molar ratio) mixture of lithium sulfide ($Li_2S$) and silicon sulfide ($SiS_2$) was placed in a crucible of vitreous carbon. The crucible was heated to 950°C in a stream of argon in a vertical furnace, so that the mixture fell in a molten state. After heating for two hours, the crucible was rapidly cooled in liquid nitrogen.

This gave the lithium ion-conductive non-crystalline sulfide-containing solid electrolyte expressed by $0.6Li_2S-0.4SiS_2$.

Pulverized particles of the lithium ion-conductive non-crystalline solid electrolyte and the lithium iron oxide were mixed at a weight ratio of one to one. A cathode material was then prepared by mixing 90% by weight of the mixture and 10% by weight of carbon as a conductive material.

An anode was a lithium foil having a thickness of 0.1 mm and punched out to a disk of 10 mm in diameter.

A disk-like solid lithium battery element of 10 mm in diameter was prepared by joining 20 mg of the cathode material with the anode of lithium foil via the solid electrolyte. The solid lithium battery element was placed in a stainless steel case and sealed with a gasket to form a solid lithium battery.

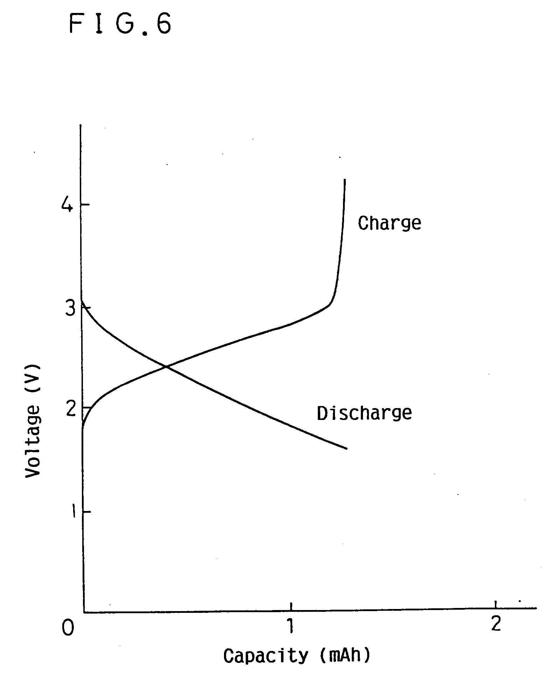

The solid lithium battery thus prepared was subjected to charge-discharge test at a constant current of 100 μA in a voltage range of 1.6 to 4.0 V. Fig. 6 shows a charge-discharge curve obtained at the second cycle.

The charge-discharge curve in Fig. 6 shows that it is possible to charge and discharge the solid lithium battery obtained in a voltage range of 2V to 3V.

According to the present invention, a solid lithium battery containing the lithium iron oxide as the active material can be obtained.

Example 15

A solid lithium battery was manufactured in the same manner as in Example 14, except that the solid lithium battery of Example 15 contained a lithium ion-conductive non-crystalline sulfide-containing solid electrolyte expressed by $0.01Li_3PO_4-0.63Li_2S-0.36SiS_2$ and the lithium iron oxide of Example 9 synthesized from the starting materials mixed at a ratio of Li/Fe=1.5 and immersed in water of 0°C. The properties of the solid lithium battery were then evaluated.

The lithium ion-conductive non-crystalline sulfide-containing solid electrolyte $0.01Li_3PO_4-0.63Li_2S-0.36SiS_2$ was prepared in the following manner. A 1:63:36 (molar ratio) mixture of lithium phosphate ($Li_3PO_4$), lithium sulfide ($Li_2S$), and silicon sulfide ($SiS_2$) was placed in a crucible of vitreous carbon. After heating at 950°C for two hours, the molten solution was poured into double rollers and cooled rapidly.

The solid lithium battery thus prepared was subjected to charge-discharge test under the same conditions as those of Example 14. The charge-discharge test showed that it is possible to charge and discharge the solid lithium battery obtained in a voltage range of 2V to 3V.

According to the present invention, a solid lithium battery containing the lithium iron oxide as the active material can be obtained.

Example 16

A solid lithium battery was manufactured in the same manner as in Example 14, except that the solid electrolyte used was a lithium ion-conductive non-crystalline sulfide-containing solid electrolyte expressed by $0.30LiI-0.35Li_2S-0.35B_2S_3$. The properties of the lithium battery were then evaluated.

The lithium ion-conductive non-crystalline sulfide-containing solid electrolyte $0.30LiI-0.35Li_2S-0.35B_2S_3$ was prepared in the following manner. A 6:7:7 (molar ratio) mixture of lithium iodide (LiI), lithium sulfide ($Li_2S$), and boron sulfide ($B_2S_3$) was sealed into a crystal glass tube under reduced pressure. After heating at 950°C for two hours, the silica tube was placed into water and cooled rapidly.

The solid lithium battery thus prepared was subjected to charge-discharge test under the same conditions as those of Example 14. The charge-discharge test showed that it is possible to charge and discharge the solid lithium battery obtained in a voltage range of 2V to 3V.

According to the present invention, a solid lithium battery containing the lithium iron oxide as the active material can be obtained.

Example 17

A solid lithium battery was manufactured in the same manner as in Example 14, except that the lithium iron oxide used in Example 17 was the same as that of Example 9 synthesized from the starting materials mixed at a ratio of Li/Fe=1.5 and immersed in water of 10°C. The properties of the solid lithium battery were then evaluated.

The solid lithium battery thus prepared was subjected to charge-discharge test under the same conditions as those of Example 14. The charge-discharge test showed that the solid lithium battery obtained was chargeable and dischargeable in a voltage range of 2V to 3V and had a capacity greater than that of the solid lithium battery obtained in Example 14.

The lithium iron oxide with extremely sparse impurities prepared by the method of the present invention was favorably used as the active material to give a solid lithium battery with a greater capacity.

Although γ-FeOOH was used as a starting material, iron(III) oxyhydroxide, in all the above examples, other iron(III) oxyhydroxides, for example, β-FeOOH having the tunnel structure, may be used instead. Such iron(III) oxyhydroxide also gives the lithium iron oxide applicable for the active material of lithium batteries, although the lithium iron oxide obtained has a structure reflecting the structure of the starting material and shows a different diffusion velocity of lithium ions when used as the active material of lithium batteries. The present invention is thus not restricted to the lithium iron oxides prepared from γ-FeOOH used as the starting material, iron(III) oxyhydroxide.

Although LiOH·H$_2$O, LiOH, Li$_2$O, and their mixtures were used as the starting material of lithium compound in the above examples, other lithium compounds such as Li$_2$O$_2$, Li$_2$O$_3$, and their mixtures may have similar effects. The lithium compounds used as the starting material in the present invention are thus not restricted to those specified in the examples.

The lithium iron oxide was represented as LiFeO$_2$ in the Examples as shown above. In general, ion exchange reaction is likely to generate non-stoichiometric compounds. It is, therefore, inevitable that a non-stoichiometric compound represented by the formula Li$_x$FeO$_2$ (0<x≤2) may be generated even with the method of the present invention.

The lithium batteries described in the above examples contained the lithium iron oxide as the cathode active material while using metal lithium as the anode active material, or contained the lithium iron oxide as the anode active material while using LiCoO$_2$ as the cathode active material. Lithium alloys such as Li-Al, graphite, and the like may be used as the anode active material, whereas, LiNiO$_2$ and the like may be applicable for the cathode active material. Other than those described in the above examples, electrolytes using LiPF$_6$ as a solute or using ethylene carbonate as a solvent and solid electrolytes such as Li$_2$S-P$_2$S$_5$ and LiI-Al$_2$O$_3$ may also be applicable. The lithium batteries of the present invention are thus not restricted to those specified in the above examples.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the scope of the claims.

**Claims**

1. A method of synthesizing a lithium iron oxide, which method comprising the steps of:

   preparing a starting material which includes at least iron(III) oxyhydroxide and a lithium compound, and
   heating said starting material in a water vapor-containing atmosphere,
   wherein the heating temperature in said heating step is not higher than 350°C, and
   wherein the water vapor pressure in said heating step is lower than the saturated water vapor pressure at the heating temperature.

2. The method in accordance with claim 1, wherein said iron(III) oxyhydroxide is γ-FeOOH.

3. The method in accordance with claim 1, wherein a ratio of said lithium compound to said iron(III) oxyhydroxide in said starting material expressed as a molar ratio of lithium to iron is in a range of Li/Fe≥1.

4. The method in accordance with claim 3, wherein the ratio of said lithium compound to said iron(III) oxyhydroxide in said starting material expressed as the molar ratio of lithium to iron is in a range of Li/Fe≥1.4.

5. The method in accordance with claim 3, which method further comprising a step of immersing the reaction product obtained by said heating step in water having a temperature of not higher than 30°C after said heating step.

6. The method in accordance with claim 4, which method further comprising a step of immersing the reaction product obtained by said heating step in water having a temperature of not higher than 30°C after said heating step.

7. The method in accordance with claim 1, wherein said lithium compound is at least one selected from the group consisting of Li$_2$O, LiOH, and LiOH·H$_2$O.

8. The method in accordance with claim 7, wherein the heating temperature in said heating step is not lower than 100°C.

9. A method of synthesizing a lithium iron oxide comprising the steps of:

   preparing a starting material which includes at least iron (III) oxyhydroxide and a lithium compound,
   heating said starting material at a temperature of not higher than 350°C and not lower than 100°C in a water vapor-containing atmosphere to obtain a reaction product,
   wherein the water vapor pressure in said heating step is lower than the saturated water vapor pressure at the heating temperature,
   and immersing said reaction product in water having a temperature of not higher than 30°C to dissolve an unreacted part of said lithium compound remained in said reaction product and to obtain a lithium iron oxide expressed by LiFeO$_2$.

10. The method in accordance with claim 9, wherein iron(III) oxyhydroxide is γ-FeOOH.

11. The method in accordance with claim 10, wherein said lithium compound is at least one selected from the group consisting of Li$_2$O, LiOH, and LiOH · H$_2$O.

12. The method in accordance with claim 11, wherein a ratio of said lithium compound to said iron(III) oxyhydroxide in said starting material expressed as a molar ratio of lithium to iron is in a range of Li/Fe≥1.

13. The method in accordance with claim 11, wherein the ratio of said lithium compound to said iron(III) oxyhydroxide in said starting material expressed as the molar ratio of lithium to iron is in a range of Li/Fe≥1.4.

14. A lithium iron oxide expressed by LiFeO$_2$ and having a corrugated layer structure synthesized by a method in accordance with claim 1.

15. A lithium battery comprising an electrolyte having lithium-ion conductivity and a lithium iron oxide as an electrode active material in accordance with claim 14.

**Patentansprüche**

1. Eine Methode zur synthetischen Herstellung eines Lithiumeisenoxids, welche besagte Methode die nachfolgenden Schritte umfasst:

   Herstellung eines Ausgangsmaterials, welches mindestens Eisen-(III)-oxyhydroxid und eine Lithiumverbindung umfasst, und

   Erhitzen des besagten Ausgangsmaterials in einer Wasserdampf enthaltenden Atmosphäre, wobei man im Zuge des besagten Erhitzungsschrittes bis auf eine Temperatur erhitzt, die nicht über 350 °C hinausgeht, und wobei außerdem im Zuge des besagten Erhitzungsschrittes ein Wasserdampfdruck vorgegeben wird, der niedriger ist als der Sättigungsdampfdruck des Wassers bei der entsprechenden Temperatur, auf die man jeweils erhitzt.

2. Die Methode in Übereinstimmung mit dem Anspruch 1, wobei es sich bei dem besagten Eisen-(III)-oxyhydroxid um die Verbindung γ-FeOOH handelt.

3. Die Methode in Übereinstimmung mit dem Anspruch 1, wobei das Verhältnis der in den jeweiligen Ausgangsmaterialien vorliegenden Lithiumverbindung zu dem entsprechenden Eisen-(III)-oxyhydroxid, ausgedrückt als das molare Verhältnis des Elements Lithium zu dem Element Eisen, in einem Zahlenbereich liegt, der durch die Relation Li/Fe ≥ 1 gegeben ist.

4. Die Methode in Übereinstimmung mit dem Anspruch 3, wobei das Verhältnis der in den jeweiligen Ausgangsmaterialien vorliegenden Lithiumverbindung zu dem entsprechenden Eisen-(III)-oxyhydroxid, ausgedrückt als das molare Verhältnis des Elements Lithium zu dem Element Eisen, in einem Zahlenbereich liegt, der durch die Relation Li/Fe ≥ 1,4 gegeben ist.

5. Die Methode in Übereinstimmung mit dem Anspruch 3, wobei die besagte Methode außerdem einen Schritt umfasst, im Zuge dessen man das mit Hilfe des Erhitzungsschrittes erhaltene Reaktionsprodukt im Anschluß an diesen besagten Erhitzungsschritt in Wasser mit einer Temperatur von höchstens 30 °C eintaucht.

6. Die Methode in Übereinstimmung mit dem Anspruch 4, wobei die besagte Methode außerdem einen Schritt umfasst, im Zuge dessen man das mit Hilfe des Erhitzungsschrittes erhaltene Reaktionsprodukt im Anschluß an diesen besagten Erhitzungsschritt in Wasser mit einer Temperatur von höchstens 30 °C eintaucht.

7. Die Methode in Übereinstimmung mit dem Anspruch 1, wobei es sich bei der besagten Lithiumverbindung um mindestens eine der Verbindungen handelt, die man aus der Gruppe ausgewählt hat, welche die folgenden Verbindungen umfasst: Li$_2$O, LiOH und LiOH · H$_2$O.

8. Die Methode in Übereinstimmung mit dem Anspruch 7, wobei die im Rahmen des besagten Erhitzungsschrittes vorgegebene Temperatur, auf die man erhitzt, nicht niedriger als 100 °C ist.

9. Eine Methode zur synthetischen Herstellung eines Lithiumeisenoxids, welche die nachfolgenden Schritte umfasst:

   Herstellung eines Ausgangsmaterials, welches mindestens Eisen-(III)-oxyhydroxid und eine Lithiumverbindung umfasst, und

   Erhitzen des besagten Ausgangsmaterials in einer Wasserdampf enthaltenden Atmosphäre bei einer Temperatur, die nicht höher als 350 °C und nicht niedriger als 100 °C ist, um auf diese Art und Weise ein Reaktionsprodukt zu erhalten, wobei außerdem im Zuge des besagten Erhitzungsschrittes ein Wasserdampfdruck vorgegeben wird, der niedriger ist als der Sättigungsdampfdruck des Wassers bei der entsprechenden Temperatur, auf die man jeweils erhitzt,

   und das Eintauchen des besagten Reaktionsproduktes in Wasser mit einer Temperatur von höchstens 30 °C, um auf diese Art und Weise den nicht umgesetzten, in dem besagten Reaktionsprodukt zurückgebliebenen Anteil der besagten Lithiumverbindung herauszulösen und somit ein Lithiumeisenoxid zu erhalten, welches man mit Hilfe der Formel $LiFeO_2$ ausdrücken kann.

**10.** Die Methode in Übereinstimmung mit dem Anspruch 9, wobei es sich bei dem besagten Eisen-(III)-oxyhydroxid um die Verbindung $\gamma$-FeOOH handelt.

**11.** Die Methode in Übereinstimmung mit dem Anspruch 10, wobei es sich bei der besagten Lithiumverbindung um mindestens eine der Verbindungen handelt, die man aus der Gruppe ausgewählt hat, welche die folgenden Verbindungen umfasst: $Li_2O$, LiOH und $LiOH \cdot H_2O$.

**12.** Die Methode in Übereinstimmung mit dem Anspruch 11, wobei das Verhältnis der in den jeweiligen Ausgangsmaterialien vorliegenden Lithiumverbindung zu dem entsprechenden Eisen-(III)-oxyhydroxid, ausgedrückt als das molare Verhältnis des Elements Lithium zu dem Element Eisen, in einem Zahlenbereich liegt, der durch die Relation Li/Fe $\geq$ 1 gegeben ist.

**13.** Die Methode in Übereinstimmung mit dem Anspruch 11, wobei das Verhältnis der in den jeweiligen Ausgangsmaterialien vorliegenden Lithiumverbindung zu dem entsprechenden Eisen-(III)-oxyhydroxid, ausgedrückt als das molare Verhältnis des Elements Lithium zu dem Element Eisen, in einem Zahlenbereich liegt, der durch die Relation Li/Fe $\geq$ 1,4 gegeben ist.

**14.** Ein auf synthetischem Wege mit Hilfe einer Methode in Übereinstimmung mit dem Anspruch 1 hergestelltes Lithiumeisenoxid, welches man durch die Formel $LiFeO_2$ ausdrücken kann und welches eine gewellte Schichtstruktur aufweist.

**15.** Eine Lithiumbatterie, welche einen Elektrolyten umfasst, der auf elektrochemischem Wege Lithiumionen zu leiten vermag, sowie außerdem ein Lithiumeisenoxid in Übereinstimmung mit dem Anspruch 14, das als aktives Elektrodenmaterial dient.

**Revendications**

**1.** Procédé de synthèse d'un oxyde de fer de lithium, lequel procédé comprend les étapes consistant à :

préparer un matériau de départ qui inclut au moins un oxyhydroxyde de fer (III) et un composé de lithium, et

chauffer ledit matériau de départ dans une atmosphère contenant de la vapeur d'eau,

dans lequel la température de chauffage pendant ladite étape de chauffage n'est pas supérieure à 350°C, et

dans lequel la pression de la vapeur d'eau dans ladite étape de chauffage est inférieure à la pression de la vapeur d'eau saturée à la température de chauffage.

**2.** Procédé selon la revendication 1, dans lequel ledit oxyhydroxyde de fer (III) est $\gamma$-FeOOH.

**3.** Procédé selon la revendication 1, dans lequel un rapport dudit composé de lithium audit oxyhydroxyde de fer (III) dans ledit matériau de départ exprimé comme un rapport molaire du lithium au fer est dans une gamme de Li/Fe $\geq$ 1.

**4.** Procédé selon la revendication 3, dans lequel le rapport dudit composé de lithium audit oxyhydroxyde de fer (III) dans ledit matériau de départ exprimé comme le rapport molaire du lithium au fer est dans une gamme de Li/Fe $\geq$ 1,4.

**5.** Procédé selon la revendication 3, lequel comprend de plus l'étape consistant à immerger le produit réactionnel obtenu par ladite étape de chauffage dans de l'eau présentant une température qui n'est pas supérieure à 30°C après ladite étape de chauffage.

**6.** Procédé selon la revendication 4, lequel comprend de plus l'étape consistant à immerger le produit réactionnel obtenu par ladite étape de chauffage dans de l'eau présentant une température qui n'est pas supérieure à 30°C après ladite étape de chauffage.

**7.** Procédé selon la revendication 1, dans lequel ledit composé de lithium est au moins un composé choisi dans le groupe constitué de $Li_2O$, LiOH et $LiOH \cdot H_2O$.

**8.** Procédé selon la revendication 7, dans lequel la température de chauffage pendant ladite étape de chauffage n'est pas inférieure à 100°C.

**9.** Procédé de synthèse d'un oxyde de fer de lithium comprenant les étapes consistant à :

préparer un matériau de départ qui inclut au moins un oxyhydroxyde de fer (III) et un composé de lithium,

chauffer ledit matériau de départ à une température qui n'est pas supérieure à 350°C et qui n'est pas inférieure à 100°C dans une atmosphère contenant de la vapeur d'eau pour obtenir un produit réactionnel,

dans lequel la pression de la vapeur d'eau pendant ladite étape de chauffage est inférieure à la pression de la vapeur d'eau saturée à la température de chauffage, et

immerger ledit produit réactionnel dans de l'eau présentant une température qui n'est pas supérieure à 30°C pour dissoudre une partie qui n'a pas réagi dudit composé de lithium restant dans ledit produit réactionnel et pour obtenir un oxyde de fer de lithium exprimé par $LiFeO_2$.

10. Procédé selon la revendication 9, dans lequel l'oxyhydroxyde de fer (III) est $\gamma$-FeOOH.

11. Procédé selon la revendication 10, dans lequel ledit composé de lithium est au moins un composé choisi dans le groupe constitué de $Li_2O$, LiOH et $LiOH \cdot H_2O$.

12. Procédé selon la revendication 11, dans lequel un rapport dudit composé de lithium audit oxyhydroxyde de fer (III) dans ledit matériau de départ exprimé comme rapport molaire du lithium au fer est dans une gamme de Li/Fe ≥ 1.

13. Procédé selon la revendication 11, dans lequel le rapport dudit composé de lithium audit oxyhydroxyde de fer (III) dans ledit matériau de départ exprimé comme le rapport molaire du lithium au fer est dans une gamme de Li/Fe ≥ 1,4.

14. Oxyde de fer de lithium exprimé par $LiFeO_2$ et présentant une structure à couche ondulée synthétisée par un procédé selon la revendication 1.

15. Batterie d'accumulateur au lithium comprenant un électrolyte ayant une conductivité d'ions de lithium et un oxyde de fer de lithium comme matériau actif d'électrode selon la revendication 14.

FIG.1

# FIG.2

FIG.3

# F I G.4

F I G.5

FIG.6